# EUROPEAN PATENT SPECIFICATION

(11) **EP 2 165 515 B1**
(45) Date of publication and mention of the grant of the patent: **18.09.2013**
(21) Application number: 08700194.7
(22) Date of filing: 03.01.2008
(51) Int. Cl.: H04M 1/23, H01H 13/70, G06F 3/041, G06F 3/048, G06F 3/033, H04M 1/02

(54) **KEYPAD WITH TACTILE TOUCH GLASS**
TASTENFELD MIT FÜHLBAREM BERÜHRUNGSGLAS
PAVÉ NUMÉRIQUE AVEC VERRE SENSIBLE AU TOUCHER

(30) Priority: 06.07.2007 US 774187
(43) Date of publication of application: 24.03.2010
(73) Proprietor: Sony Ericsson Mobile Communications AB, 221 88 Lund (SE)
(72) Inventor: HERINGSLACK, Henrik, S-212 18 Malmo (SE)
(74) Representative: Valea AB
(86) International application number: PCT/IB2008/050010
(87) International publication number: WO 2009/007859

(56) References cited:
- EP-A- 1 179 767
- WO-A-2007/057266
- WO-A-2007/147507
- GB-A- 2 402 105
- US-A- 6 118 435
- US-A1- 2002 144 886

## Description

### BACKGROUND OF THE INVENTION

Implementations described herein relate generally to input devices, and more particularly, to handheld input devices that may provide tactile feedback in response to key entries.

Devices, such as handheld mobile communication devices, conventionally include input devices that provide some form of tactile feedback to a user indicating that a keystroke has been detected by the communication device. These conventional keypads are formed of physically distinct keys. Currently, there are no adequate solutions of providing tactile feedback to keypads formed of a single physical device or surface.

GB2402105A discloses a touch screen, namely an LCD display, and a selection of a virtual key. When a user presses down on the screen overlying the virtual key with a first force, a selection of the virtual key occurs. When the user presses with a second force, the selection is confirmed by actuating a mechanical switch underlying the touch screen.

US6118435A discloses a display screen, namely a CRT screen, for displaying images and a touch panel disposed above and close to the display screen.

WO2007/057266A discloses a control unit with a rigid, touch-sensitive input element with means of producing tactile feedback, with the input element being able to move at right angles to a control surface facing the user. To produce the tactile feedback, a compression spring element is arranged between a mount and a rear face of the input element. The provided screen upon which user selections are made is an LCD screen.

### SUMMARY OF THE INVENTION

According to one aspect, a mobile communication device is provided. The mobile communication device may comprise a keypad assembly comprising: a glass or plastic cover that includes a plurality of keys printed on a surface of the glass or plastic cover, which surface is opposite a touch surface of the glass or plastic cover: and an actuator for detecting a displacement of the glass or plastic cover, in a direction towards the surface that is opposite a touch surface of the glass or plastic cover (410); and logic configured to: sense an input position within the keypad assembly, and determine an input key based on the sensed input position when the actuator detects the displacement of the glass or plastic cover layout.

Additionally, the mobile communication device may further comprise a silicon mat located between the glass or plastic cover and the actuator, wherein the silicon mat includes a protrusion that is configured to contact the actuator when the glass or plastic cover is pressed.

Additionally, the mobile communication device may further include a display, wherein the logic may be further configured to: control the display to display information associated with the determined key.

Additionally, the logic may be further configured to: determine a scrolling input by sensing input positions within the keypad assembly when a menu is displayed via the display.

According to another aspect, a method may be provided. The method may comprise sensing a position of input relative to a plurality of keys, wherein the plurality of keys are printed on a surface of a glass or plastic cover which surface is opposite a touch surface of the glass or plastic cover, wherein a silicon mat with a protrusion is located between said surface of the glass or plastic cover and an actuator; detecting a displacement of the glass or plastic cover when the protrusion contacts the actuator; and determining an input key based on a sensed position of input when displacement of the surface is detected.

Additionally, the sensing a position of input relative to a plurality of keys may be sensed by a capacitive film on the surface.

Additionally, the position of input may be determined by detecting a finger of a user, the method further comprising providing tactile feedback to the user by producing tilt of the glass or plastic cover.

Additionally, the detecting a displacement of the surface may be detected when the actuator produces an electrical signal.

Additionally, the method may further comprise determining scrolling input by sensing positions of input relative to a plurality of keys when no displacement of the surface is detected and a menu is displayed on a display.

### BRIEF DESCRIPTION OF THE DRAWINGS

The accompanying drawings, which are incorporated in and constitute a part of this specification, illustrate an embodiment of the invention and, together with the description, explain the invention. In the drawings,
Fig. 1 is a diagram of an exemplary implementation of a mobile terminal;
Fig. 2 illustrates an exemplary functional diagram of a mobile terminal;
Fig. 3 illustrates an exemplary functional diagram of the keypad logic of Fig. 2;
Figs. 4A-4B illustrate an exemplary keypad assembly; and
Figs. 5 is a flowchart of exemplary processing.

### DETAILED DESCRIPTION OF THE INVENTION

The following detailed description of the invention refers to the accompanying drawings. The same reference numbers in different drawings may identify the same or similar elements. Also, the following detailed description does not limit the embodiments..

Exemplary implementations of the embodiments will be described in the context of a mobile communications terminal. It should be understood that a mobile communication terminal is an example of a device that can employ a keypad consistent with the principles of the embodiments and should not be construed as limiting the types or sizes of devices or applications that can use implementations of keypads described herein. For example, keypads consistent with the principles of the embodiments may be used on desktop communication devices, household appliances, such as microwave ovens and/or appliance remote controls, automobile radio faceplates, industrial devices, such as testing equipment, etc.

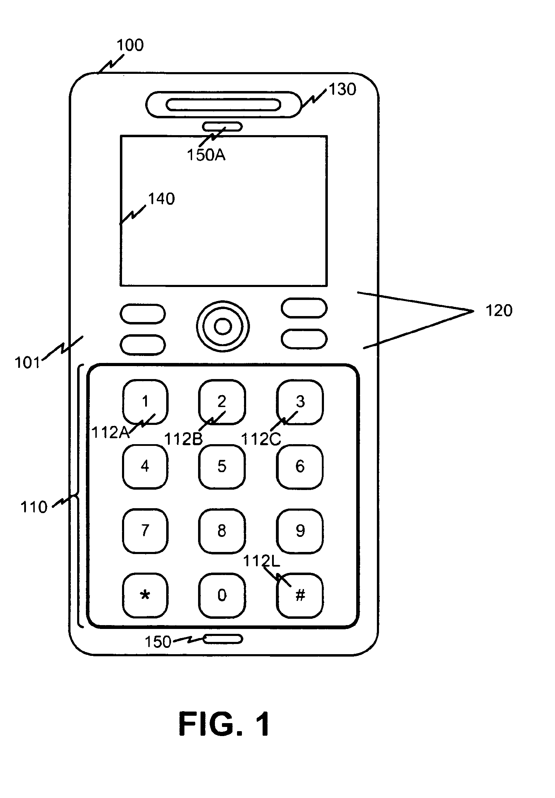

Fig. 1 is a diagram of an exemplary implementation of a mobile terminal consistent with the principles of the invention. Mobile terminal 100 (hereinafter terminal 100) may be a mobile communication device. As used herein, a "mobile communication device" and/or "mobile terminal" may include a radiotelephone; a personal communications system (PCS) terminal that may combine a cellular radiotelephone with data processing, a facsimile, and data communications capabilities; a personal digital assistant (PDA) that can include a radiotelephone, pager, Internet/intranet access, web browser, organizer, calendar, and/or global positioning system (GPS) receiver; and a laptop and/or palmtop receiver or other appliance that includes a radiotelephone transceiver.

Terminal 100 may include housing 101, keypad area 110 containing keys 112A-L, control keys 120, speaker 130, display 140, and microphones 150 and 150A. Housing 101 may include a structure configured to hold devices and components used in terminal 100. For example, housing 101 may be formed from plastic, metal, or composite and may be configured to support keypad area 110, control keys 120, speaker 130, display 140 and microphones 150 and/or 150A.

Keypad area 110 may include devices and/or logic that can be used to display images to a user of terminal 100 and to receive user inputs in association with the displayed images. For example, a number of keys 112A-L (collectively keys 112) may be displayed via keypad area 110. Implementations of keypad area 110 may be configured to receive a user input when the user interacts with keys 112. For example, the user may provide an input to keypad area 110 directly, such as via the user's finger, or via other devices, such as a stylus. User inputs received via keypad area 110 may be processed by components or devices operating in terminal 100.

In one implementation, keypad area 110 may be covered by a single plate of glass with characters associated with keys 112 back-printed on the glass cover. Implementations of keys 112 may have key information associated therewith, such as numbers, letters, symbols, etc. A user may interact with keys 112 to input information into terminal 100. For example, a user may operate keys 112 to enter digits, commands, and/or text, into terminal 100. In another embodiment, keypad area 110 may be configured as an LCD display, where information associated with each of keys 112 may be displayed via the LCD display.

Control keys 120 may include buttons that permit a user to interact with terminal 100 to cause terminal 100 to perform an action, such as to display a text message via display 140, raise or lower a volume setting for speaker 130, etc.

Speaker 130 may include a device that provides audible information to a user of terminal 100. Speaker 130 may be located in an upper portion of terminal 100 and may function as an ear piece when a user is engaged in a communication session using terminal 100. Speaker 130 may also function as an output device for music and/or audio information associated with games and/or video images played on terminal 100.

Display 140 may include a device that provides visual information to a user. For example, display 140 may provide information regarding information entered via keys 112, incoming or outgoing calls, text messages, games, phone books, the current date/time, volume settings, etc., to a user of terminal 100. Implementations of display 140 may be implemented as black and white or color displays, such as liquid crystal displays (LCDs).

Microphones 150 and/or 150A may, each, include a device that converts speech or other acoustic signals into electrical signals for use by terminal 100. Microphone 150 may be located proximate to a lower side of terminal 100 and may be configured to convert spoken words or phrases into electrical signals for use by terminal 100. Microphone 150A may be located proximate to speaker 130 and may be configured to receive acoustic signals proximate to a user's ear while the user is engaged in a communications session using terminal 100. For example, microphone 150A may be configured to receive background noise as an input signal for performing background noise cancellation using processing logic in terminal 100.

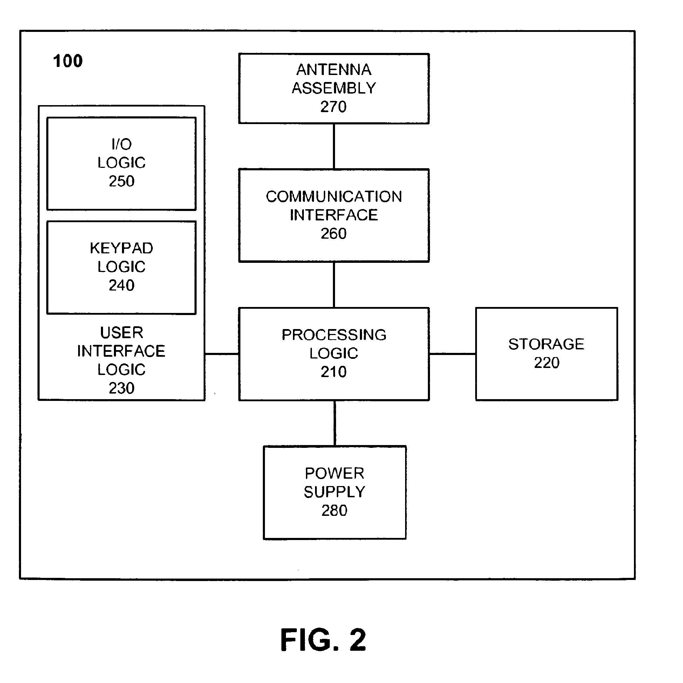

Fig. 2 illustrates an exemplary functional diagram of mobile terminal 100 consistent with the principles described herein. As shown in Fig. 2, terminal 100 may include processing logic 210, storage 220, user interface logic 230, keypad logic 240, input/output (I/O) logic 250, communication interface 260, antenna assembly 270, and power supply 280.

Processing logic 210 may include a processor, microprocessor, an application specific integrated circuit (ASIC), field programmable gate array (FPGA), or the like. Processing logic 210 may include data structures or software programs to control operation of terminal 100 and its components. Implementations of terminal 100 may use an individual processing logic component or multiple processing logic components, such as processing logic components operating in parallel. Storage 220 may include a random access memory (RAM), a read only memory (ROM), a magnetic or optical disk and its corresponding drive, and/or another type of memory to store data and instructions that may be used by processing logic 210.

User interface logic 230 may include mechanisms, such as hardware and/or software, for inputting information to terminal 100 and/or for outputting information from terminal 100. In one implementation, user interface logic 230 may include keypad logic 240 and input/output logic 250.

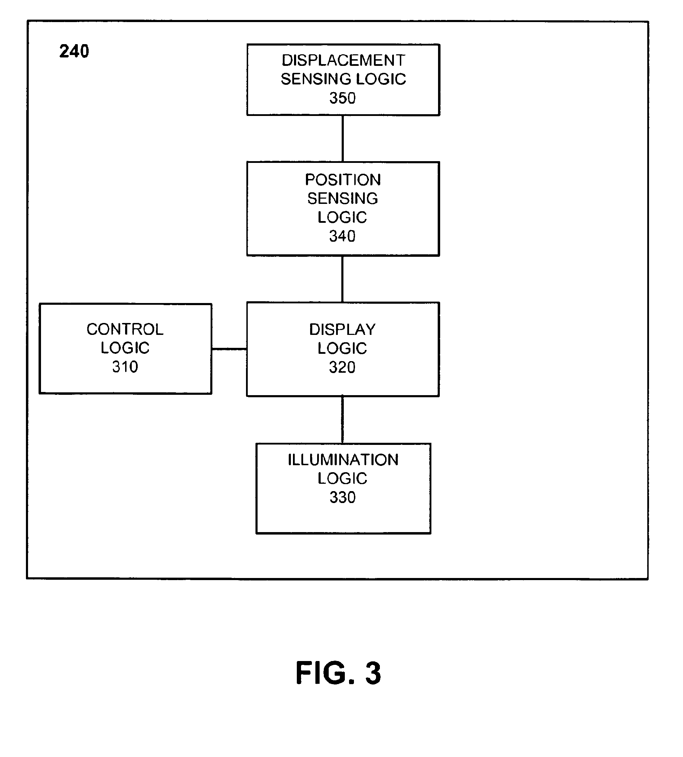

Keypad logic 240 may include mechanisms, such as hardware and/or software, used to control the appearance of keypad area 110 and to receive user inputs via keypad area 110. For example, keypad logic 240 may change displayed information associated with keys 112 using an LCD display. In some implementations, keypad logic 240 may be application controlled and may automatically re-configure the appearance of keypad area 110 based on an application being launched by the use of terminal 100, the execution of a function associated with a particular application/device included in terminal 100 or some other application or function specific event. Keypad logic 240 is described in greater detail below with respect to Fig. 3.

Input/output logic 250 may include hardware or software to accept user inputs to make information available to a user of terminal 100. Examples of input and/or output mechanisms associated with input/output logic 250 may include a speaker (e.g., speaker 130) to receive electrical signals and output audio signals, a microphone (e.g., microphone 150 or 150A) to receive audio signals and output electrical signals, buttons (e.g., control keys 120) to permit data and control commands to be input into terminal 100, and/or a display (e.g., display 140) to output visual information.

Communication interface 260 may include, for example, a transmitter that may convert base band signals from processing logic 210 to radio frequency (RF) signals and/or a receiver that may convert RF signals to base band signals. Alternatively, communication interface 260 may include a transceiver to perform functions of both a transmitter and a receiver. Communication interface 260 may connect to antenna assembly 270 for transmission and reception of the RF signals. Antenna assembly 270 may include one or more antennas to transmit and receive RF signals over the air. Antenna assembly 270 may receive RF signals from communication interface 260 and transmit them over the air and receive RF signals over the air and provide them to communication interface 260.

Power supply 280 may include one or more power supplies that provide power to components of terminal 100. For example, power supply 280 may include one or more batteries and/or connections to receive power from other devices, such as an accessory outlet in an automobile, an external battery, or a wall outlet. Power supply 280 may also include metering logic to provide the user and components of terminal 100 with information about battery charge levels, output levels, power faults, etc.

As will be described in detail below, terminal 100, consistent with the principles described herein, may perform certain operations relating to receiving inputs via keypad area 110 in response to user inputs or in response to processing logic 210. Terminal 100 may perform these operations in response to processing logic 210 executing software instructions of a keypad configuration/reprogramming application contained in a computer-readable medium, such as storage 220. A computer-readable medium may be defined as a physical or logical memory device and/or carrier wave.

The software instructions may be read into storage 220 from another computer-readable medium or from another device via communication interface 260. The software instructions contained in storage 220 may cause processing logic 210 to perform processes that will be described later. Alternatively, hardwired circuitry may be used in place of or in combination with software instructions to implement processes consistent with the principles described herein. Thus, implementations consistent with the principles of the embodiments are not limited to any specific combination of hardware circuitry and software.

Fig. 3 illustrates an exemplary functional diagram of the keypad logic 240 of Fig. 2 consistent with the principles of the embodiments. Keypad logic 240 may include control logic 310, display logic 320, illumination logic 330, position sensing logic 340 and displacement sensing logic 350.

Control logic 310 may include logic that controls the operation of display logic 320, and receives signals from position sensing logic 340 and displacement sensing logic 350. Control logic 310 may determine an input character based on the received signals from position sensing logic 340 and/or displacement sensing logic 350. Control logic 310 may be implemented as standalone logic or as part of processing logic 210. Moreover, control logic 310 may be implemented in hardware and/or software.

Display logic 320 may include devices and logic to present information via keypad area 110, to a user of terminal 100. Display logic 320 may include processing logic to interpret signals and instructions and a display device having a display area to provide information. Implementations of display logic 320 may include a liquid crystal display (LCD) that includes, for example, biphenyl or another stable liquid crystal material. In this embodiment, keys 112 may be displayed via the LCD.

Illumination logic 330 may include logic to provide backlighting to a lower surface of keypad area 110 in order to display information associated with keys 112. Illumination logic 330 may also provide backlighting to be used with LCD based implementations of display logic 320 to make images brighter and to enhance the contrast of displayed images. Implementations of illumination logic 330 may employ light emitting diodes (LEDs) or other types of devices to illuminate portions of a display device. Illumination logic 330 may provide light within a narrow spectrum, such as a particular color, or via a broader spectrum, such as full spectrum lighting. Illumination logic 330 may also be used to provide front lighting to an upper surface of a display device or keypad area 110 that faces a user. Front lighting may enhance the appearance of keypad area 110 or a display device by making information more visible in high ambient lighting environments, such as viewing a display device outdoors.

Position sensing logic 340 may include logic that senses the position and/or presence of an object within keypad area 110. Implementations of position sensing logic 340 may be configured to sense the presence and location of an object. For example, position sensing logic 340 may be configured to determine a location (e.g. one of keys 112) in keypad area 110 where a user places his/her finger regardless of how much pressure the user exerts on keypad area 110. Implementations of position sensing logic 340 may use capacitive, resistive or inductive techniques to identify the presence of an object and to receive an input via the object. In one implementation for example, position sensing logic 340 may include a transparent film that can be placed within keypad area 110. The film may be adapted to change an output, such as a voltage or current, as a function of a change in capacitance, resistance, or an amount of pressure exerted on the film and/or based on a location where capacitance, resistance or pressure is exerted on the film. For example, assume that a user presses on the film in an upper left hand corner of the film. The film may produce an output that represents the location at which the pressure was detected.

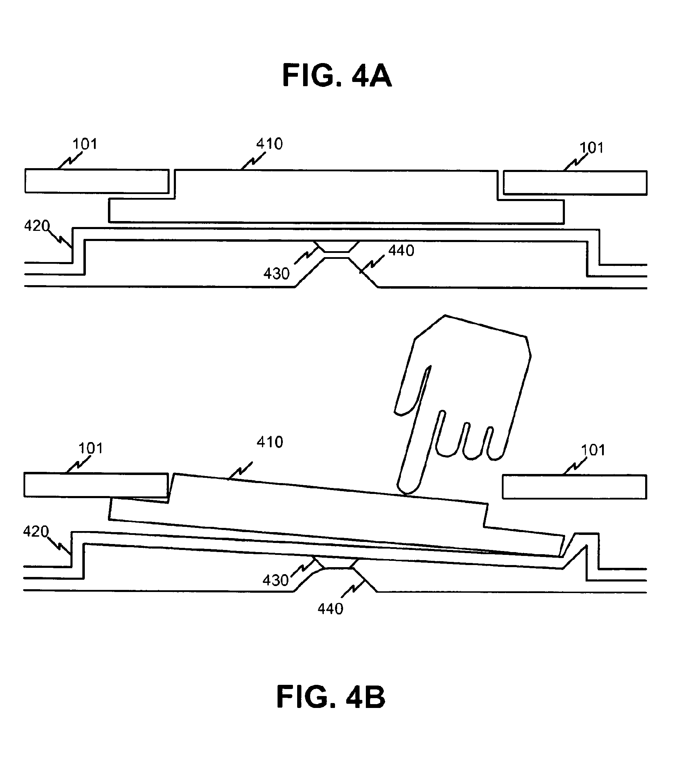

Displacement sensing logic 350 may include mechanisms and logic to sense a displacement of a mechanism within keypad area 110. For example, displacement sensing logic 350 may sense movement of a glass cover over keypad area 110 or an LCD contained within keypad area 110. Implementations of displacement sensing logic 350 may include mechanisms that produce electrical signals from displacements, such as any type of actuator or a piezoelectric actuator, etc. In one implementation of terminal 100, displacement sensing logic 350 may be used to sense when the user has exerted a pressure, or force, that exceeds a determined threshold. Further details of the mechanisms included within displacement sensing logic 350 are shown in Figs. 4A and 4B.

Figs. 4A and 4B illustrate an exemplary key input system within keypad area 110. As shown, the key input system with keypad area 110 may include housing 101, glass cover 410, silicon mat 420, protrusion 430 and actuator 440.

As described above housing 101 may include a hard plastic material used to mount components within terminal 100. In one embodiment, glass cover 410 may be mounted in housing 101 within keypad area 110. In other embodiments, an LCD 410 may be mounted in housing 101 within keypad area 110.

Glass cover 410 may include a single sheet of glass that may contain back-printed information in order to provide a number of keys 112. In other embodiments, glass cover 410 may cover an LCD or glass cover 410 may be replaced with an LCD that may be used to display keys 112 to a user. Other materials such as plastic or composite materials may also be used in place of glass for cover 410. In each case, cover 410 may include a single surface located over keypad area 110 or forming part of keypad area 110. As described above, position sensing logic 340 may include a transparent film may be placed on glass cover 410 or placed underneath glass cover 410 in order to sense a position of an input. In other embodiments, LCD 410 may be covered with a clear capacitive film that produces an output that is representative of a position of pressure or input, in order to enable position sensing logic 340 to sense a position of input within keypad area 110.

Silicon mat 420 may include a flexible silicon material. Silicon mat 420 may contact the bottom surface of glass cover 410 or may be located adjacent to glass cover 410, without being in direct contact with glass cover 410. Materials that are relatively easy to compress may be used in place of silicon for mat 420. Protrusion 430 may include an extension or protrusion of silicon mat 420 that may extend in a downward direction. Protrusion 430 may be used to cause a displacement or deformation of actuator 440 or contact actuator 440 when silicon mat 420 is displaced.

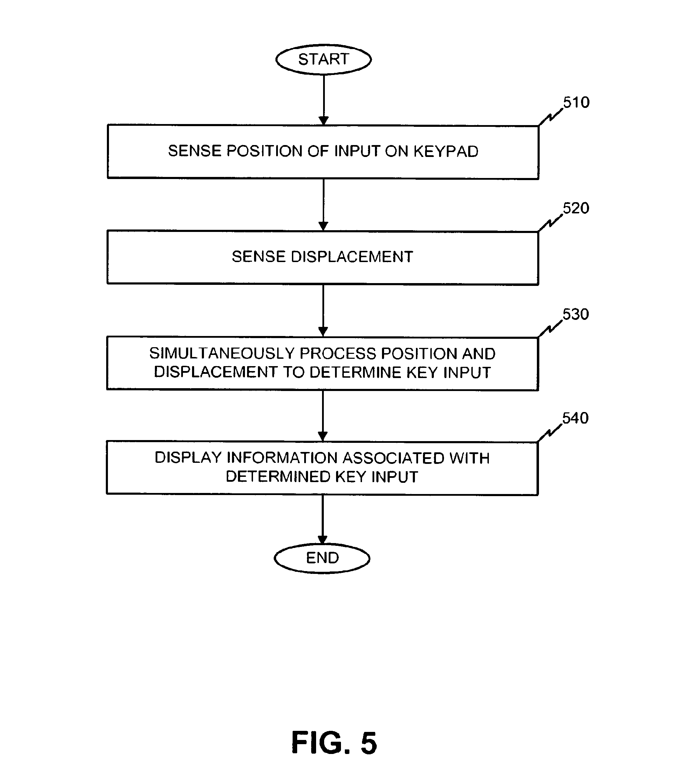

Actuator 440 may include a flexible material that when displaced, deformed or contacted produces an electrical signal. As shown in Fig. 4B for example, protrusion 430 may come into contact with actuator 440 as a result of a user pressing on glass cover 410. Actuator 440 may be included in displacement sensing logic 350. When actuator 440 is deformed due to pressure from protrusion 430 or contacted via protrusion 430, an electrical signal may be sent to displacement sensing logic 350 to indicate a key input. The deformation of actuator 440 may also give the user tactile feedback that a key input has been received by terminal 100 as glass cover tilts when pressed (as shown in Fig. 4B). In this exemplary implementation, actuator is located in the center of keypad area 110. In other exemplary implementations, multiple actuators may be used. Operation of the key input system shown in Figs 4A-4B is described below with reference to Fig. 5.

Fig. 5 is a flowchart of exemplary processing consistent with the principles described herein. Terminal 100 may provide a keypad configuration as shown in Fig. 1, via printed characters on glass cover 410 or in another embodiment may provide a keypad configuration via an LCD 410. Process 500 may begin when a position of input may be sensed (act 510). For example, a user's finger may be located over (or contacting) one of keys 112 within keypad area 110. As described above, the position of the user's finger may be sensed by a capacitive film that sends a signal to position sensing logic 340.

When a user presses down with sufficient force on glass cover 410 (or in other embodiments, LCD 410) as shown in Fig. 4B, displacement may be sensed (block 520). For example, a user may press down on glass cover 410 with sufficient force to cause protrusion 430 to come into contact with, and deform, actuator 440. The deformation of actuator 440 may cause a signal to be sent to displacement sensing logic 350 that may indicate a user's intention to enter associated information with one of keys 112. Deformation of actuator 440 also produces a tilt or movement of glass cover 410 that provides tactile feedback to a user that a key input is received, and in some embodiments, electrical feedback (indicting key input) may not be required.

Upon receiving a signal sensing displacement, both the sensed position and sensed displacement signals may be simultaneously processed to determine a key input (block 530). For example, when displacement sensing logic 350 senses displacement of glass cover 410, the position of input is also simultaneously determined by position sensing logic 340. For example if a user's finger is applying pressure over the "2" key 112B in keypad area 110, as determined by position sensing logic 340, when displacement sensing logic 350 senses displacement of glass cover 410, control logic 310 may determine that the number "2" has been entered.

In response to determining the key input (block 530), the associated information with the determined key input may be displayed (block 540). For example, if control logic 310 determines that key 112B is actuated, the number "2" may be displayed via display 140. In this manner, a user may be given tactile feedback relating to entered information and also visual feedback. In further examples, the associated information with a key 112 may not be displayed.

In further examples, the "2" key (112B) may be associated with the letters "a," "b" and "c," in which case, three successive displacements of glass cover 410 (block 520) may be sensed while the user's finger is determined to be located on key 112B (block 510), in order for control logic 310 to determine that a "c" is the desired character to be entered by a user.

In further embodiments, if control keys 120 are used to display a menu of choices via display 140, a user may scroll through the menu of choices by moving his/her finger downward over the keypad area 110. In this embodiment, block 520 may not be enacted, as there may be no displacement of glass cover 410 during scrolling input. For example, moving a finger over the "2" key, the "5" key and the "8" key, may be sensed by position sensing logic 340, and may be determined by control logic 310 to be scrolling input. In this embodiment, highlighted choices in the displayed menu may be changed based on scrolling input over keypad area 110.

### CONCLUSION

Implementations consistent with the principles of the embodiments may provide tactile feedback to a user, via a keypad that includes a single surface or cover.

The foregoing description of preferred embodiments of the embodiments provides illustration and description, but is not intended to be exhaustive or to limit the embodiments to the precise form disclosed. Modifications and variations are possible in light of the above teachings or may be acquired from practice of the embodiments.

While a series of acts has been described with regard to Fig. 5, the order of the acts may be modified in other implementations consistent with the principles of the embodiments. Further, non-dependent acts may be performed in parallel.

It will be apparent to one of ordinary skill in the art that aspects of the embodiments, as described above, may be implemented in many different forms of software, firmware, and hardware in the implementations illustrated in the figures. The actual software code or specialized control hardware used to implement aspects consistent with the principles of the embodiments is not limiting of the embodiments. Thus, the operation and behavior of the aspects were described without reference to the specific software code--it being understood that one of ordinary skill in the art would be able to design software and control hardware to implement the aspects based on the description herein.

Further, certain portions of the embodiments may be implemented as "logic" that performs one or more functions. This logic may include hardware, such as hardwired logic, an application specific integrated circuit, a field programmable gate array or a microprocessor, software, or a combination of hardware and software.

It should be emphasized that the term "comprises/comprising" when used in this specification and/or claims is taken to specify the presence of stated features, integers, steps or components but does not preclude the presence or addition of one or more other features, integers, steps, components or groups thereof.

No element, act, or instruction used in the present application should be construed as critical or essential to the embodiments unless explicitly described as such. Also, as used herein, the article "a" is intended to include one or more items. Where only one item is intended, the term "one" or similar language is used. Further, the phrase "based on" is intended to mean "based, at least in part, on" unless explicitly stated otherwise.

## Claims

1. A mobile communication device, comprising:
a keypad assembly (110) comprising:
a glass or plastic cover (410) that includes a plurality of keys (112A-112L) printed on a surface of the glass or plastic cover (410), which surface is opposite a touch surface of the glass or plastic cover (410), and
an actuator (440) for detecting a displacement of the glass or plastic cover (410) in a direction towards said surface that is opposite a touch surface of the glass or plastic cover (410); and
logic (210) configured to:
sense an input position within the keypad assembly (110), and
determine an input key based on the sensed input position when the actuator (440) detects the displacement of the glass or plastic cover (410).

2. The mobile communication device of claim 1, wherein the keypad assembly (110) further comprises:
a silicon mat (420) located between the glass or plastic cover (410) and the actuator (440), wherein the silicon mat includes a protrusion (430) that is configured to contact the actuator (440) when the glass or plastic cover is pressed.

3. The mobile communication device of claim 1, further including a display (140), wherein the logic is further configured to control the display (140) to display information associated with the determined key.

4. The mobile communication device of claim 3, wherein the logic is further configured to determine a scrolling input by sensing input positions within the keypad assembly (110) when a menu is displayed via the display (140).

5. The mobile communication device of claim 1, wherein the logic is configured to sense an input position within the keypad assembly (110) by a capacitive film on the bottom surface of the glass or plastic cover (410).

6. The mobile communication device of claim 1, wherein keypad assembly (110) is to provide tactile feedback to the user by producing tilt of the glass or plastic cover (410).

7. The mobile communication device of claim 1, wherein the actuator (440) produces an electrical signal in response to a downward displacement of the bottom surface.

8. The mobile communication device of claim 1, wherein the bottom surface includes a liquid crystal display (LCD) and wherein the plurality of keys (112A-112L) are displayed on the LCD.

9. A method, comprising:
sensing a position of input relative to a plurality of keys (112A-112L), wherein the plurality of keys (112A-112L) are printed on a surface of a glass or plastic cover (410) which surface is opposite a touch surface of the glass or plastic cover (410), wherein a silicon mat (420) with a protrusion (430) is located between the surface of the glass or plastic cover (410) which surface is opposite a touch surface of the glass or plastic cover (410) and an actuator (440);
detecting a displacement of the glass or plastic cover (410) when the protrusion contacts the actuator (440); and
determining an input key based on a sensed position of input when displacement of the surface is detected.

10. The method of claim 9, wherein the sensing a position of input relative to a plurality of keys (112A-112L) is sensed by a capacitive film on the surface.

11. The method of claim 10, wherein the position of input is determined by detecting a finger of a user, the method further comprising:
providing tactile feedback to the user by producing tilt of the glass or plastic cover (410).

12. The method of claim 10, wherein the detecting a displacement of the surface is detected when the actuator (440) produces an electrical signal.

13. The method of claim 9, further comprising:
determining scrolling input by sensing positions of input relative to the plurality of keys (112A-112L) when no displacement of the surface is detected and a menu is displayed on a display (140).

## Patentansprüche

1. Mobile Kommunikationsvorrichtung, umfassend:
eine Tastenfeldanordnung (110), umfassend:
eine Glas- oder Kunststoffabdeckung (410), die eine Vielzahl von Tasten (112A-112L) umfasst, die auf eine Fläche der Glas- oder Kunststoffabdeckung (410) gedruckt sind, die einer Berührungsfläche der Glas- oder Kunststoffabdeckung (410) gegenüberliegt, und
einen Aktuator (440) zum Erfassen einer Bewegung der Glas- oder Kunststoffabdeckung (410) in eine Richtung zu der Fläche hin, die einer Berührungsfläche der Glas- oder Kunststoffabdeckung (410) gegenüberliegt; und
Logik (210) konfiguriert zum:
Erfassen einer Eingabeposition innerhalb der Tastenfeldanordnung (110), und
Bestimmen einer Eingabetaste basierend auf der erfassten Eingabeposition, wenn der Aktuator (440) die Bewegung der Glas- oder Kunststoffabdeckung (410) erkennt.

2. Mobile Kommunikationsvorrichtung nach Anspruch 1, wobei die Tastenfeldanordnung (110) ferner umfasst:
eine Silikonmatte (420) zwischen der Glas- oder Kunststoffabdeckung (410) und dem Aktuator (440), wobei die Silikonmatte einen Vorsprung (430) aufweist, der konfiguriert ist, den Aktuator (440) zu berühren, wenn die Glas- oder Kunststoffabdeckung gedrückt wird.

3. Mobile Kommunikationsvorrichtung nach Anspruch 1, ferner umfassend ein Display (140), wobei die Logik ferner zum Steuern des Displays (140) zum Anzeigen von Informationen in Zusammenhang mit der bestimmten Taste konfiguriert ist.

4. Mobile Kommunikationsvorrichtung nach Anspruch 3, wobei die Logik ferner zum Bestimmen einer Eingabe durch Scrollen durch Erfassen von Eingabepositionen innerhalb der Tastenfeldanordnung (110), wenn ein Menü mittels dem Display (140) angezeigt wird, konfiguriert ist.

5. Mobile Kommunikationsvorrichtung nach Anspruch 1, wobei die Logik zum Erfassen einer Eingabeposition innerhalb der Tastenfeldanordnung (110) durch einen kapazitiven Film an der unteren Fläche der Glas- oder Kunststoffabdeckung (410) konfiguriert ist.

6. Mobile Kommunikationsvorrichtung nach Anspruch 1, wobei die Tastenfeldanordnung (110) durch Erzeugung einer Neigung der Glas- oder Kunststoffabdeckung (410) ein taktiles Feedback an den Benutzer geben soll.

7. Mobile Kommunikationsvorrichtung nach Anspruch 1, wobei der Aktuator (440) als Reaktion auf eine Bewegung der unteren Fläche nach unten ein elektrisches Signal erzeugt.

8. Mobile Kommunikationsvorrichtung nach Anspruch 1, wobei die untere Fläche eine Flüssigkristallanzeige (LCD-Display) enthält und wobei die Vielzahl von Tasten (112A-112L) auf dem LCD-Display dargestellt wird.

9. Verfahren, umfassend:
Erfassen einer Eingabeposition relativ zu einer Vielzahl von Tasten (112A-112L), wobei die Vielzahl von Tasten (112A-112L) auf eine Fläche einer Glas- oder Kunststoffabdeckung (410) gedruckt ist, die einer Berührungsfläche der Glas- oder Kunststoffabdeckung (410) gegenüberliegt, wobei sich eine Silikonmatte (420) mit einem Vorsprung (430) zwischen der Glas- oder Kunststoffabdeckung (410), die einer Berührungsfläche der Glas- oder Kunststoffabdeckung (410) gegenüberliegt, und einem Aktuator (440) befindet,
Erfassen einer Bewegung der Glas- oder Kunststoffabdeckung (410) wenn der Vorsprung den Aktuator (440) berührt; und
Bestimmen einer Eingabetaste basierend auf einer erfassten Eingabeposition, wenn eine Bewegung der Fläche erkannt wird.

10. Verfahren nach Anspruch 9, wobei das Erfassen einer Eingabeposition relativ zu einer Vielzahl von Tasten (112A-112L) durch einen kapazitiven Film auf der Fläche erfasst wird.

11. Verfahren nach Anspruch 10, wobei die Eingabeposition durch Erfassen eines Fingers eines Benutzers bestimmt wird, und das Verfahren ferner umfasst:
Bereitstellen eines taktilen Feedbacks an den Benutzer durch Erzeugung einer Neigung der Glas- oder Kunststoffabdeckung (410).

12. Verfahren nach Anspruch 10, wobei das Erfassen einer Bewegung der Fläche erfolgt, wenn der Aktuator (440) ein elektrisches Signal erzeugt.

13. Verfahren nach Anspruch 9, ferner umfassend:
Bestimmen einer Eingabe durch Scrollen durch Erfassen von Eingabepositionen relativ zu der Vielzahl von Tasten (112A-112L), wenn keine Bewegung der Fläche erfasst wird und ein Menü auf einem Display (140) angezeigt wird.

## Revendications

1. Dispositif de communication mobile, comprenant :
un ensemble de clavier (110) qui comprend :
un couvercle en verre ou en plastique (410) qui comporte une pluralité de touches (112A-112L) imprimées sur une surface du couvercle en verre ou en plastique (410), laquelle surface est opposée à une surface tactile du couvercle en verre ou en plastique (410), et
un actionneur (440) destiné à détecter un déplacement du couvercle en verre ou en plastique (410) dans une direction vers ladite surface qui est opposée à une surface tactile du couvercle en verre ou en plastique (410) ; et
une logique (210) configurée :
pour détecter une position d'entrée dans l'ensemble de clavier (110), et
pour déterminer une touche d'entrée sur la base de la position d'entrée détectée lorsque l'actionneur (440) détecte le déplacement du couvercle en verre ou en plastique (410).

2. Dispositif de communication mobile de la revendication 1, dans lequel l'ensemble de clavier (110) comprend en outre :
une nappe de silicium (420) située entre le couvercle en verre ou en plastique (410) et l'actionneur (440), où la nappe de silicium comporte une protubérance (430) qui est configurée pour entrer en contact avec l'actionneur (440) lorsque le couvercle en verre ou en plastique est pressé.

3. Dispositif de communication mobile de la revendication 1, comportant en outre un écran (140), dans lequel la logique est en outre configurée pour commander l'écran (140) pour afficher des informations associées à la touche déterminée.

4. Dispositif de communication mobile de la revendication 3, dans lequel la logique est en outre configurée pour déterminer une entrée de défilement en détectant les positions d'entrée dans l'ensemble de clavier (110) lorsqu'un menu est affiché par l'intermédiaire de l'écran (140).

5. Dispositif de communication mobile de la revendication 1, dans lequel la logique est configurée pour détecter une position d'entrée dans l'ensemble de clavier (110) par un film capacitif sur la surface inférieure du couvercle en verre ou en plastique (410).

6. Dispositif de communication mobile de la revendication 1, dans lequel l'ensemble de clavier (110) est destiné à fournir une rétroaction tactile à l'utilisateur en entraînant une inclinaison du couvercle en verre ou en plastique (410).

7. Dispositif de communication mobile de la revendication 1, dans lequel l'actionneur (440) produit un signal électrique en réponse à un déplacement vers le bas de la surface inférieure.

8. Dispositif de communication mobile de la revendication 1, dans lequel la surface inférieure comporte un écran à cristaux liquides (LCD) et dans lequel la pluralité de touches (112A-112L) sont affichées sur l'écran LCD.

9. Procédé, comprenant le fait :
de détecter une position d'entrée par rapport à une pluralité de touches (112A-112L), où la pluralité de touches (112A-112L) sont imprimées sur une surface d'un couvercle en verre ou en plastique (410), laquelle surface est opposée à une surface tactile du couvercle en verre ou en plastique (410), où une nappe de silicium (420) avec une protubérance (430) est située entre la surface du couvercle en verre ou en plastique (410), laquelle surface est opposée à une surface tactile du couvercle en verre ou en plastique (410) et un actionneur (440) ;
de détecter un déplacement du couvercle en verre ou en plastique (410) lorsque la protubérance entre en contact avec l'actionneur (440) ; et
de déterminer une touche d'entrée sur la base d'une position détectée d'entrée lorsque le déplacement de la surface est détectée.

10. Procédé de la revendication 9, dans lequel la détection d'une position d'entrée par rapport à une pluralité de touches (112A-112L) est détectée par un film capacitif sur la surface.

11. Procédé de la revendication 10, dans lequel la position d'entrée est déterminée par détection d'un doigt d'un utilisateur, le procédé comprenant en outre le fait :
de fournir une rétroaction tactile à l'utilisateur en entraînant une inclinaison du couvercle en verre ou en plastique (410).

12. Procédé de la revendication 10, dans lequel la détection d'un déplacement de la surface est détectée lorsque l'actionneur (440) produit un signal électrique.

13. Procédé de la revendication 9, comprenant en outre le fait :
de déterminer une entrée de défilement en détectant des positions d'entrée par rapport à la pluralité de touches (112A-112L) lorsqu'aucun déplacement de la surface n'est détecté et un menu est affiché sur un écran (140).
